# EUROPÄISCHE PATENTSCHRIFT

(11) **EP 0 709 551 B1**
(45) Veröffentlichungstag und Bekanntmachung des Hinweises auf die Patenterteilung: **22.04.1998**
(21) Anmeldenummer: 95116605.7
(22) Anmeldetag: 21.10.1995
(51) Int. Cl.: F01K 23/10

(54) **Verfahren und Kombikraftwerk zur thermischen Leistungserhöhung**
Process and combined cycle power plant for increasing the thermal power
Procédé et centrale combinée pour augmenter la puissance thermique

(30) Priorität: 28.10.1994 AT 2015/94
(43) Veröffentlichungstag der Anmeldung: 01.05.1996
(73) Patentinhaber: AUSTRIAN ENERGY & ENVIRONMENT SGP/WAAGNER-BIRO GmbH, A-1211 Wien (AT)
(72) Erfinder: Vale, Werner, A-8021 Graz (AT)
(74) Vertreter: Wallner, Gerhard, Dipl.-Ing.

(56) Entgegenhaltungen:
- EP-A- 0 609 037
- WO-A-92/20905
- DE-A- 1 426 440
- DE-A- 2 849 691
- DE-B- 1 074 326

## Beschreibung

Die Erfindung betrifft ein Verfahren zur thermischen und elektrischen Leistungserhöhung eines Kombikraftwerkes bestehend aus einer Gasturbine mit angeschlossener Verwertung des Turbinenabgases als Sauerstoffträger in einem Dampferzeuger durch Einsatz einer leistungsstärkeren Gasturbine unter Beibehaltung der Turbinenabgasverwertung und ein Kombikraftwerk mit Gasturbine und Dampferzeuger zur thermischen Verwertung des Gasturbinenabgases zur Durchführung des Verfahrens.

Kombikraftwerke mit Gasturbine und thermische Verwertung des Gasturbinenabgases in einem Dampferzeuger als Sauerstoffträger sind in mehreren Ausführungen (DE 3 731 627 A1, DE 821 733, CH 245 488 A und CH 637 184 A5) bekannt.

Bei der Leistungserhöhung derartiger Kraftwerke, insbesondere nach Erreichung der Lebensdauer des Gasturbinenteiles, ist es relativ einfach die Gasturbine mit ihrem Generatorteil zu ersetzen, wobei durch die neue Gasturbine mehr Abgas und auch mit anderer Temperatur frei wird, welches einen Austausch der Brenner und der Abgasleitung zum Dampferzeuger verlangt. Da dieser Dampferzeugerteil eine andere Lebensdauer aufweist, bedeutet dies das Verwerfen einer durchaus noch wirtschaftlich arbeitenden Energieerzeugungseinheit, was gleichbedeutend mit Verlust an Wirtschaftlichkeit verbunden ist.

Die Erfindung hat es sich zur Aufgabe gestellt, diesem wirtschaftlichen Nachteil zu begegnen und für den Abbau der thermischen Überlast des Dampferzeugers einen eigenen Abhitzekessel vorzusehen, sodaß die Umbauarbeiten auf ein Minimum begrenzt werden.

Das erfindungsgemäße Verfahren ist dadurch gekennzeichnet, daß ein Teil des heißen Turbinenabgases in einem neu zu errichtenden Abhitzekessel und der andere Teil über eine Mischeinrichtung dem Dampferzeuger zugeführt wird, und in der Mischeinrichtung ein Teil des im Abhitzekessel abgekühlten Turbinenabgas dem anderen Teil des heißen Turbinenabgases zur Konditionierung zugemischt wird, sodaß die nachfolgende Abgasleitung mit angeschlossenem Brenner des Dampferzeugers mit vorgegebener Temperatur und Abgas- bzw. Sauerstoffmenge beaufschlagt wird. Insbesondere wird das Volumenverhältnis der vom Abhitzekessel abströmenden Abgasmenge in den Kamin bzw. in die Mischeinrichtung entsprechend dem Sauerstoffbedarf des Dampferzeugers und der mit dem Abhitzekessel zugeführten heißen Abgasmenge bei gegebener Temperatur geregelt.

Das erfindungsgemäße Kombikraftwerk ist dadurch gekennzeichnet, daß im Abgaskanal der Gasturbine zum Dampferzeuger eine Abzweigleitung und eine Mischeinrichtung vorgesehen ist, und daß in der von der Abzweigung abführenden Zweigleitung ein Abhitzekessel angeordnet ist, dessen abgekühltes Abgas mit einem Teilstrom der Mischeinrichtung zuführbar ist. Vorzugsweise weist die Mischeinrichtung (5) Regeleinrichtungen, wie z. B. Regelklappen zur Einhaltung der Temperatur und Menge des die Mischeinrichtung (5) verlassenden Gasstromes auf.

Ein nicht unbedeutender Vorteil im Umbau besteht darin, daß Umbauten und Vergrößerungen bestehender Anlagen nicht nur billiger, sondern auch mit weniger Standortproblemen als bei einem völligen Neubau behaftet sind.

Die Erfindung ist in der angeschlossenen Figur in Form eines Schaltbildes beispielsweise und schematisch dargestellt.

Durch den modernen Abhitzekesselbau, insbesondere durch die katalytischen Nachverbrennung im Abhitzekessel, läßt sich ein großer Wärmerückgewinnungswirkungsgrad erreichen, sodaß dieser Abhitzekessel praktisch den gleichen Wirkungsgrad wie der Dampferzeuger aufweist.

Darüberhinaus kann das Gasturbinenabgas, wenn es von einer mit Diesel oder erdgasbefeuerten Gasturbine stammt, infolge des niedrigeren Taupunktes im Abhitzekessel auf tiefere Temperaturen abgekühlt werden als das im nachgeschalteten mit Schweröl befeuerten Dampferzeuger erzeugte Abgas, wodurch sich sogar ein besserer thermischer Wirkungsgrad des Gesamtsystems ergibt.

In der angeschlossenen Figur ist ein Schaltbild der erfindungsgemäßen Anlage schematisch und beispielsweise dargestellt, wobei die Zubauten nach der Leistungserhöhung mit starken Strichen angedeutet sind.

In einem Kombikraftwerk wird das Abgas aus der Gasturbine 2 als Sauerstoff- und Wärmeträger über eine Abgasleitung 1 einem Dampferzeuger 3 als erhitzte Verbrennungsluft zugeführt, wobei, insbesondere wenn durch diese Schaltung die Funktion des Lufterhitzers im Dampferzeuger 3 durch die Gasturbine 2 übernommen wird, wodurch eine Größenabhängigkeit zwischen Gasturbine 2 und Dampferzeuger 3 besteht.

Soll nun eine Leistungserhöhung durch Vergrößerung der Gasturbine durchgeführt werden, so muß entweder die ganze Anlage vergrößert und umgebaut werden, oder gegebenenfals eine zweite Anlage parallel zu dieser gebaut werden. Dieses Problem verschärft sich bei der Betrachtung der unterschiedlichen Lebensdauer von Gasturbine 2 und Dampferzeuger 3, weil in den meisten Fällen der Dampferzeuger 3 sogar über die Lebensdauer der neuen Gasturbine noch wirtschaftlich weiterbetrieben werden kann. Wird die Gasturbine 2 erneuert bzw. vergrößert oder zumindest die Menge und der Wärmeinhalt des Turbinenabgases durch den Umbau geändert muß nicht nur die Gasturbine sondern auch die Abgasleitung, sowie der Dampferzeuger, bzw. mindestens die Brenner 10 des Dampferzeugers 3 angepaßt bzw. erneuert werden.

Um diesen Nachteil des kompletten Neubaues zu umgehen, wird in der Abgasleitung 1 eine Abzweigung 4 angeordnet, an welcher eine Zweigleitung 6 zu einem Abhitzekessel 7 führt, in welchem die Abwärme gewonnen und eventuell über eine Turbine einem weiteren Generator zugeführt wird. Gegebenenfalls kann hier oder einer Wärmeverwertung eventuell für die Fernheizung zugefürt wird. Ein Teil des im Abhitzekessel 7 abgekühlten Abgases wird einer Mischeinrichtung 5 im zuge der Abgasleitung 1 zugeführt, sodaß der Wärmewert und Sauerstoffgehalt des Turbinenabgases durch Mischung entsprechend dem Wärmewert vor dem Umbau geregelt wird, sodaß den Brennern 10 des Dampferzeugers 3 die gleiche Menge bei gleicher Temperatur des Sauerstoffträgers (Turbinenabgas) zugeleitet wird und der Wärmehaushalt des Dampferzeugers 3 nicht gestört wird. Der andere Teil des kalten Abgases wird über die Leitung 8 dem Kamin 9 und damit in die Umgebungsluft eingeleitet. Zur Regelung des konstanten Abgasstromes für die Brenner 10 sind in der Mischenrichtung 5 und/oder Abzweigung 4 entsprechende Drosselklappen vorgesehen, die temperaturgesteuert sind.

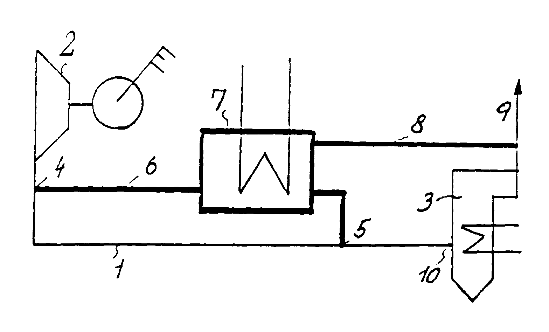

## Patentansprüche

1. Verfahren zur thermischen und elektrischen Leistungserhöhung eines Kombikraftwerkes bestehend aus einer Gasturbine (2) mit angeschlossener Verwertung des Turbinenabgases als Sauerstoffträger in einem Dampferzeuger (3) durch Einsatz einer leistungsstärkeren Gasturbine unter Beibehaltung der Turbinenabgasverwertung, wobei, ein Teil des heißen Turbinenabgases einem neu zu errichtenden Abhitzekessel (7) und der andere Teil über eine Mischeinrichtung (5) dem Dampferzeuger (3) zugeführt wird und wobei in der Mischeinrichtung (5) ein Teil des im Abhitzekessel (7) abgekühlten Turbinengases den nicht abgekühlten Turbinengasen zur Konditionierung zugemischt wird, sodaß die der Mischeinrichtung folgende Abgasleitung mit angeschlossenem Brenner des Dampferzeugers mit vorgegebener Temperatur und Abgas- bzw. Sauerstoffmenge beaufschlagt wird.

2. Verfahren nach Anspruch 1. dadurch gekennzeichnet, daß das Volumenverhältnis der vom Abhitzekessel abströmenden Abgasmenge in einen Kamin (8) bzw. in die Mischeinrichtung (5) entsprechend dem Sauerstoffbedarf des Dampferzeugers und der vom Abhitzekessel zugeführten heißen Abgasmenge bei gegebener Temperatur geregelt wird.

3. Kombikraftwerk mit Gasturbine und Dampferzeuger zur thermischen Verwertung des Gasturbinenabgases zur Durchführung des Verfahrens nach Anspruch 1 oder 2, wobei im Abgaskanal (1) der Gasturbine (2) zum Dampferzeuger (3) eine Abzweigleitung (4) und eine Mischeinrichtung (5) vorgesehen ist, und wobei in der von der Abzweigung (4) abführenden Zweigleitung (6) ein Abhitzekessel (7) angeordnet ist, dessen abgekühltes Abgas zumindest zum Teil der Mischeinrichtung (5) zuführbar ist.

4. Kombikraftwerk nach Anspruch 3, dadurch gekennzeichnet, daß die Mischeinrichtung (5) Regeleinrichtungen, wie z. B. Regelklappen zur Einhaltung der Temperatur und der Menge des die Mischeinrichtung (5) verlassenden Gasstromes aufweist.

## Claims

1. Process for thermal and electrical increase of output of a combination power plant, comprising a gas turbine (2) linked with utilisation of turbine waste gases as oxygen carrier in a steam generator (3) by using a gas turbine of higher output whilst maintaining the turbine waste gas utilisation, and a portion of the hot turbine waste gas is delivered to a newly established waste heat vessel (7), and the other portion is delivered via a mixing device (5) to the steam generator (3), and in the mixing device (5) a portion of the turbine gas which has been cooled in the waste heat vessel (7) is conditioned by being mixed with the uncooled turbine gases, so that the waste gas pipe downstream of the mixing device with thereto connected steam-generator burner is loaded at a specified temperature and with a specified waste gas or oxygen volume.

2. Process according to Claim 1, **characterised in that** the volume ratio of the waste gas volume flowing off the waste heat vessel into a chimney (8) or into the mixing device (5) is regulated to correspond with the oxygen requirement of the steam generator and the hot waste gas volume delivered by the waste heat vessel at a specified temperature.

3. Combination power plant comprising gas turbine and steam generator for thermal utilisation of gas turbine waste gas for carrying out the process according to Claim 1 or 2, and in the waste gas channel (1) of the gas turbine (2) to the steam generator (3) is provided a branch pipe (4) and a mixing device (5), and in the branch pipe (6) leading off the branch (4) is arranged a waste heat vessel (7) the cooled waste gas of which is at least partially delivered to the mixing device (5).

4. Combination power plant according to Claim 3, **characterised in that** the mixing device (5) comprises control mechanisms, for example regulator valves for maintaining the temperature and the volume of gas flow exiting the mixing device.

## Revendications

1. Procédé pour augmenter la puissance thermique et électrique d'une usine génératrice combinée, constituée par une turbine à gaz (2) avec mise en valeur raccordée des gaz d'échappement de la turbine sous forme de comburant dans une chaudière (3) par la mise en oeuvre d'une turbine à gaz de plus forte puissance, tout en conservant la mise en valeur des gaz d'échappement de la turbine, dans lequel une partie des gaz d'échappement chauds de la turbine est acheminée à une nouvelle chaudière à chaleur perdue (7) à installer et l'autre partie est acheminée via un mécanisme de mélange (5) à la chaudière (3), et dans lequel, dans le mécanisme de mélange (5), une partie du gaz de turbine refroidi dans la chaudière à chaleur perdue (7) est ajoutée par mélange à des fins de conditionnement aux gaz de turbine qui n'ont pas été refroidis, si bien que le conduit pour les gaz d'échappement faisant suite au mécanisme de mélange, auquel est raccordé le brûleur de la chaudière, est chargé avec une température prédéfinie et avec une quantité prédéfinie de gaz d'échappement, respectivement d'oxygène.

2. Procédé selon la revendication 1, caractérisé en ce que le rapport volumique de la quantité de gaz d'échappement s'écoulant depuis la chaudière à chaleur perdue est réglé dans une cheminée (9), respectivement dans le mécanisme de mélange (5) de manière correspondante à la demande en oxygène de la chaudière et à la quantité de gaz d'échappement chauds acheminée depuis la chaudière à chaleur perdue, à une température donnée.

3. Usine génératrice combinée comprenant une turbine à gaz et une chaudière pour la mise en valeur thermique des gaz d'échappement de la turbine, destinée à la mise en oeuvre du procédé selon la revendication 1 ou 2, dans laquelle on prévoit une dérivation (4) et un mécanisme de mélange (5) dans le canal (1) pour les gaz d'échappement de la turbine à gaz (2) menant à la chaudière (3) et dans laquelle une chaudière à chaleur perdue (7) est disposée dans le branchement (6) provenant de la dérivation (4), dont les gaz d'échappement refroidis peuvent être acheminés au moins en partie au mécanisme de mélange (5).

4. Usine génératrice combinée selon la revendication 3, caractérisée en ce que le mécanisme de mélange (5) présente des mécanismes de réglage tels que par exemple des papillons anti-retour pour le maintien de la température et de la quantité du courant de gaz quittant le mécanisme de mélange (5).
